## Europäisches Patentamt

## European Patent Office

## Office européen des brevets

(19)

(11) Veröffentlichungsnummer: **0 248 203**
A2

(12) **EUROPÄISCHE PATENTANMELDUNG**

(21) Anmeldenummer: **87106131.3**

(22) Anmeldetag: **28.04.87**

(51) Int. Cl.⁴: **B23B 31/16** , B23B 31/34

(30) Priorität: **06.06.86 DE 3619145**

(43) Veröffentlichungstag der Anmeldung:
**09.12.87 Patentblatt 87/50**

(84) Benannte Vertragsstaaten:
**AT FR GB IT SE**

(71) Anmelder: **Paul Forkardt GmbH & Co. KG**
**Rosenstrasse 44-46**
**D-4000 Düsseldorf 1(DE)**

(72) Erfinder: **Scharfen, Hans**
**In der Meer 23a**
**D- 4005 Meerbusch 1(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**D-4000 Düsseldorf 11(DE)**

(54) **Spannfutter mit zwei gegenüberliegenden Spannbacken.**

(57) Die Erfindung betrifft ein Spannfutter mit zwei gegenüberliegenden, aus Grundbacke (3) und Aufsatzbacke bestehenden Spannbacken, deren Grundbacken (3) in radialer Richtung verstellbar in einem ringförmigen Futterkörper (1) mit zentralem Spannraum (2) geführt und jeweils durch eine im wesentlichen axial verschiebbar im Futterkörper (1) gelagerte Keilstange (4) zentrisch angetrieben sind. Um ein derartig zentrisch spannendes Zweibackenfutter mit geringer axialer Baulänge und großem Spannraum (2) zu schaffen, ist jede Keilstange (4) durch einen Kolben (5) eines Druckmittelzylinders angetrieben. Die Hubbewegungen der beiden Kolben (5) sind durch ein mechanisches, parallel zur Spannachse (S) der beiden Spannbacken im Futterkörper (1) liegendes Kupplungsglied (7) zwangssynchronisiert, das vorzugsweise als Kupplungswelle ausgeführt ist. Jede Grundbacke (3) kann mit einer drehbar gelagerten Zwischenbacke (10) versehen sein, wobei mindestens eine dieser drehbaren Zwischenbacken (10) mittels eines Schwenkantriebes (14a,14b) verdrehbar gelagert ist.

Fig. 4

## Spannfutter mit zwei gegenüberliegenden Spannbacken

Die Erfindung betrifft ein Spannfutter mit zwei gegenüberliegenden, aus Grund-und Aufsatzbacke bestehenden Spannbacken, deren Grundbacken in radialer Richtung verstellbar in einem ringförmigen Futterkörper mit zentralem Spannraum geführt und jeweils durch eine im wesentlichen axial verschiebbar im Futterkörper gelagerte Keilstange zentrisch angetrieben sind.

Derartige Spannfutter sind bekannt. Mit ihnen werden auskragende Werkstücke gespannt, wobei die im zentralen Spannraum des ringförmigen Futterkörpers liegenden Werkstücke von den radial im ringförmigen Futterkörper angeordneten Spannbacken derart erfaßt werden, daß aus der Stirnfläche des Futterkörpers hervorstehende Spannbacken vermieden werden. Derartige, aus der Stirnfläche des Futterkörpers hervorstehende Spannbacken unterliegen einer großen Aufweitung durch Spann- und Fliehkräfte.

Bei den Spannfuttern der eingangs beschriebenen Art wird die Spannkraft der Spannbacken direkt in der Spannebene in den ringförmigen Futterkörper eingeleitet, so daß die Reaktionskräfte im Futterkörper anders als bei den auskragenden Spannbacken ohne Vergrößerung durch die Hebelarmlänge der Spannkraft entsprechen.

Als Nachteil ist bei den bekannten Futterkonstruktionen der eingangs beschriebenen Art anzusehen, daß ein zentraler Kolben verwendet wird, der zu einer unerwünschten Vergrößerung der axialen Baulänge und damit bei gleichzeitiger Verringerung des Spannraumes im ringförmigen Futterkörper zu einer Vergrößerung des bei der Zerspanung auftretenden, auf die Spindel ausgeübten Kippmomentes führt.

Der Erfindung liegt die Aufgabe zugrunde, ein zentrisch spannendes Zweibackenfutter der eingangs beschriebenen Art mit geringer axialer Baulänge und großem Spannraum zu schaffen.

Die Lösung dieser Aufgabenstellung durch die Erfindung ist dadurch gekennzeichnet, daß jede Keilstange durch einen Kolben eines Druckmittelzylinders angetrieben ist und daß die Hubbewegungen der beiden Kolben durch ein mechanisches, parallel zur Spannachse der beiden Spannbacken im Futterkörper liegendes Kupplungsglied zwangssynchronisiert sind.

Der Vorteil der erfindungsgemäßen Ausbildung besteht darin, daß die zum Antrieb der beiden gegenüberliegenden Spannbacken verwendeten Druckmittelzylinder einen geringen Raumbedarf haben und günstig im ringförmigen Futterkörper untergebracht werden können. Durch die erfindungsgemäße Zwangssynchronisierung der Hubbewegungen der beiden Kolben mit Hilfe eines mechanischen, parallel zur Spannachse der beiden Spannbacken im Futterkörper liegendes Kupplungsglied wird erreicht, daß trotz der Verwendung jeweils eines Druckmittelzylinders zum Antrieb jeder der beiden Spannbacken eine zentrische Spannbewegung erfolgt, und zwar mit einem geringen, nur wenig Bauvolumen beanspruchenden Konstruktionsaufwand, so daß insgesamt ein zentrisch spannendes Zweibackenfutter mit geringer axialer Baulänge und großem Spannraum geschaffen wird.

Gemäß einem weiteren Merkmal der Erfindung ist das Kupplungsglied als Kupplungswelle mit an ihren Enden ausgebildeten Verzahnungen ausgeführt, die in entsprechende Zahnstangen eingreifen, die an mit den Kolben verbundenen Kolbenstangen ausgebildet sind. Die erfindungsgemäße Kupplungswelle kann auf einfache Weise drehbar im Futterkörper gelagert sein, so daß sich mit einfachen technischen Mitteln die erfindungsgemäße Zwangssynchronisierung erzielen läßt.

Jedes Ende des Kupplungsgliedes ist erfindungsgemäß unabhängig vom anderen Ende im Verhältnis zur zugehörigen Kolbenstange spielfrei einstellbar, so daß trotz unvermeidbarer Herstellungstoleranzen ein zentrisch spannendes Spannfutter geschaffen wird, dessen Spannmitte auf der Drehachse des Spannfutters liegt.

Bei einer bevorzugten Ausführungsform ist die Kupplungswelle ausschließlich im Bereich ihrer Enden im Futterkörper gelagert; diese Lager sind im Verhältnis zur zugehörigen Zahnstange verstellbar, so daß der erforderliche Spielausgleich erzielt werden kann.

Um das erfindungsgemäße Spannfutter mit gegenüberliegenden Spannbacken in an sich bekannter Weise zu einem sogenannten Schwenkfutter weiterbilden zu können, mit dessen Hilfe Werkstücke an mehreren Enden oder unter mehreren sich kreuzenden Achsen in einer Einspannung bearbeitet werden können, wird mit der Erfindung schließlich vorgeschlagen, jede Grundbacke mit einer drehbar gelagerten Zwischenbacke zu versehen und mindestens eine dieser drehbaren Zwischenbacken mittels eines Schwenkantriebes verdrehbar zu lagern. Auch bei dieser Weiterbildung des erfindungsgemäßen Spannfutters zu einem zentrisch spannenden Schwenkfutter bleibt der Vorteil einer geringen axialen Baulänge und eines großen zentralen Spannraumes erhalten.

Auf der Zeichnung sind zwei Ausführungsbeispiele des erfindungsgemäßen Spannfutters dargestellt, und zwar zeigen:

Fig. 1 eine Stirnansicht einer ersten Ausführungsform des Spannfutters, und zwar ohne Aufsatzbacken,

Fig. 2 einen Längsschnitt durch das Spannfutter gemäß der Schnittlinie II - II in Fig.1,

Fig. 3 einen Teilschnitt gemäß der Schnittlinie III-III in Fig.2,

Fig. 4 eine zweite Ausführungsform des als Schwenkfutter ausgebildeten Spannfutters anhand eines der Fig.2 entsprechenden Längsschnittes und

Fig. 5 einen sekantialen Schnitt gemäß der Schnittlinie V - V in Fig.4 im Bereich des Schwenkantriebes.

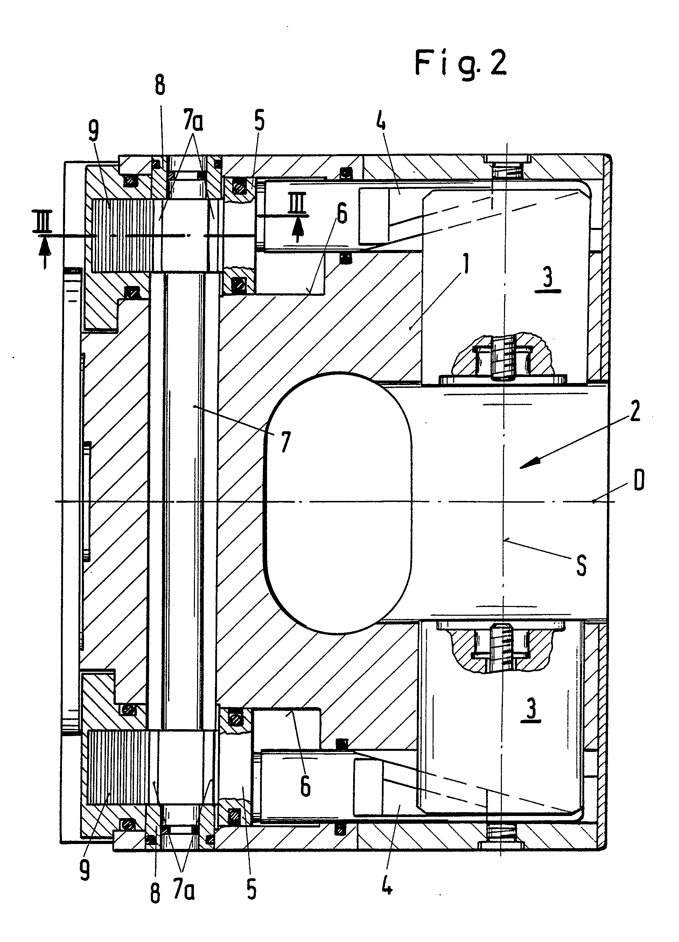

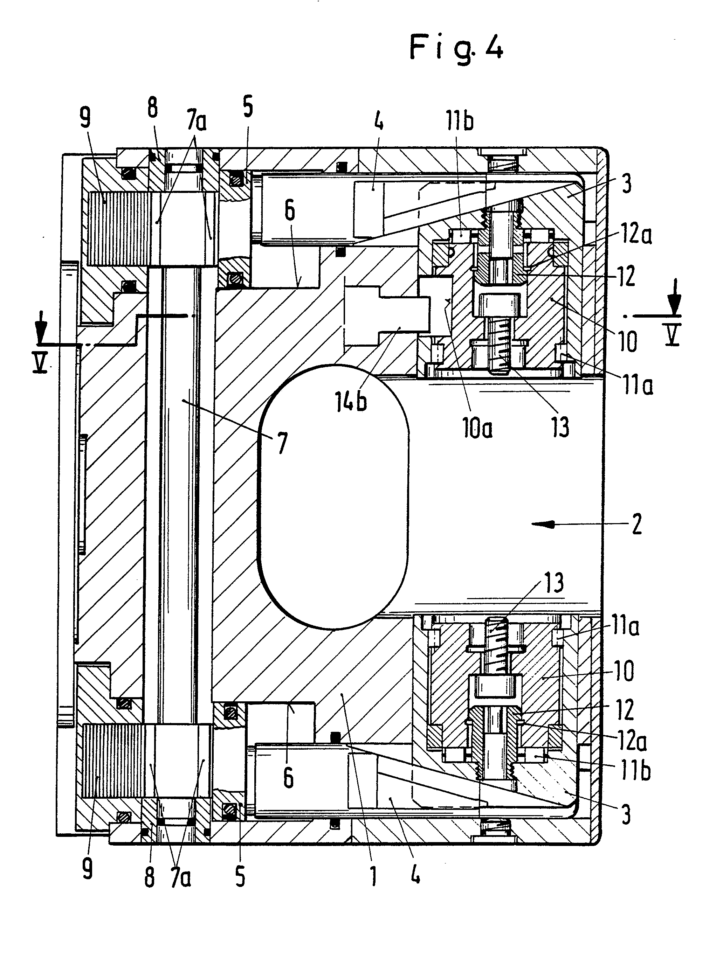

Bei beiden Ausführungsbeispielen handelt es sich um ein zentrisch spannendes Futter mit einem ringförmigen Futterkörper 1, der einen zentralen Spannraum 2 umschließt, in dem das jeweils zu bearbeitende Werkstück mittels zweier Spannbacken gehalten wird, die jeweils aus einer Grundbacke 3 und einer auf der Zeichnung nicht dargestellten Aufsatzbacke bestehen. Die beiden Grundbacken 3 sind gegenüberliegend in radialer Richtung verstellbar im Futterkörper 2 geführt, wie dies insbesondere aus den Figuren 2 und 4 hervorgeht.

Jede Grundbacke 3 wird durch eine im wesentlichen axial verschiebbar im Futterkörper 1 gelagerte Keilstange 4 angetrieben, die mit einer entsprechenden Keilschräge der Grundbacke 3 zusammenwirkt. Eine axiale Verstellung der Keilstangen 4 hat demzufolge in radialer Richtung erfolgende Verstellungen der zugehörigen Grundbacken 3 zur Folge. Durch einen formschlüssigen Eingriff zwischen Keilstange 4 und Grundbacke 3 im Bereich der Keilschrägen findet nicht nur eine radiale Zustellbewegung, sondern auch eine radiale Rückstellbewegung der Grundbacken 3 statt, wenn die Keilstangen 4 in axialer Richtung betätigt werden.

Die Betätigung der Keilstangen 4 erfolgt jeweils durch einen Kolben 5, der mit der zugehörigen Keilstange 4 verbunden und in einem entsprechenden Zylinderraum 6 des Futterkörpers 1 abgedichtet geführt ist. Die Zuführung des Druckmittels zum Zylinderraum 6 erfolgt über Leitungen oder Bohrungen im Futterkörper 1, die der besseren Übersichtlichkeit wegen auf der Zeichnung nicht dargestellt sind, sowie über ein Druckmittelüberleitungsgehäuse bekannter Bauart, das auf der Zeichnung ebenfalls fortgelassen wurde.

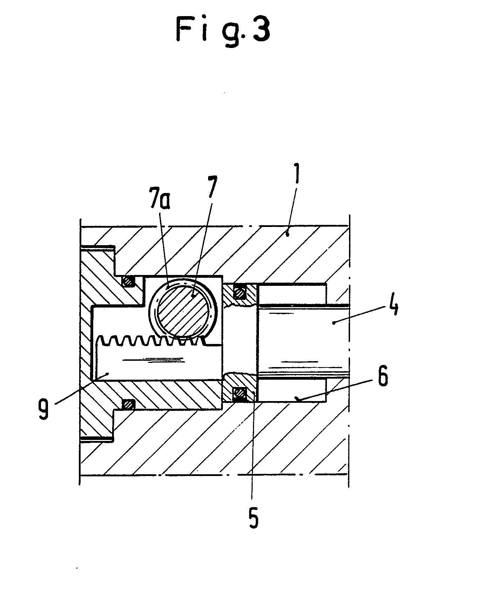

Die Hubbewegungen der beiden Kolben 5 sind durch ein mechanisches, parallel zur Spannachse S der beiden Spannbacken im Futterkörper 1 liegendes Kupplungsglied zwangssynchronisiert, das bei den beiden Ausführungsbeispielen als Kupplungswelle 7 ausgeführt ist. Diese Kupplungswelle 7 ist ausschließlich an ihren beiden Enden mittels Lagerbuchsen 8 drehbar im Futterkörper 1 gelagert und darüber hinaus im Bereich dieser beiden Enden jeweils mit einer Verzahnung 7a versehen, die bei den Ausführungsbeispielen als gerade Trapezverzahnung ausgeführt ist. In diese Verzahnungen 7a greift jeweils eine Zahnstange 9 ein, die mit dem jeweiligen Kolben 5 verbunden ist. Dieser Zahneingriff geht besonders deutlich aus Fig.3 hervor.

Jedes Ende der als Kupplungsglied wirkenden Kupplungswelle 7 ist unabhängig vom anderen Ende im Verhältnis zur zugehörigen Zahnstange 9 spielfrei einstellbar, vorzugsweise dadurch, daß die Lagerbuchse 8 im Verhältnis zur zugehörigen Zahnstange 9 verstellbar ist. Auf diese Weise wird nicht nur eine Spielfreiheit zwischen der jeweiligen Verzahnung 7a und der zugehörigen Zahnstange 9 erzielt, sondern es läßt sich auch eine Ausgangsstellung der beiden durch die Kupplungswelle 7 miteinander verbundenen Kolben 8 einstellen, die eine zentrische Bewegung der Grundbacken 3 mit einem auf der Drehachse D des Spannfutters liegenden Mittelpunkt zur Folge hat.

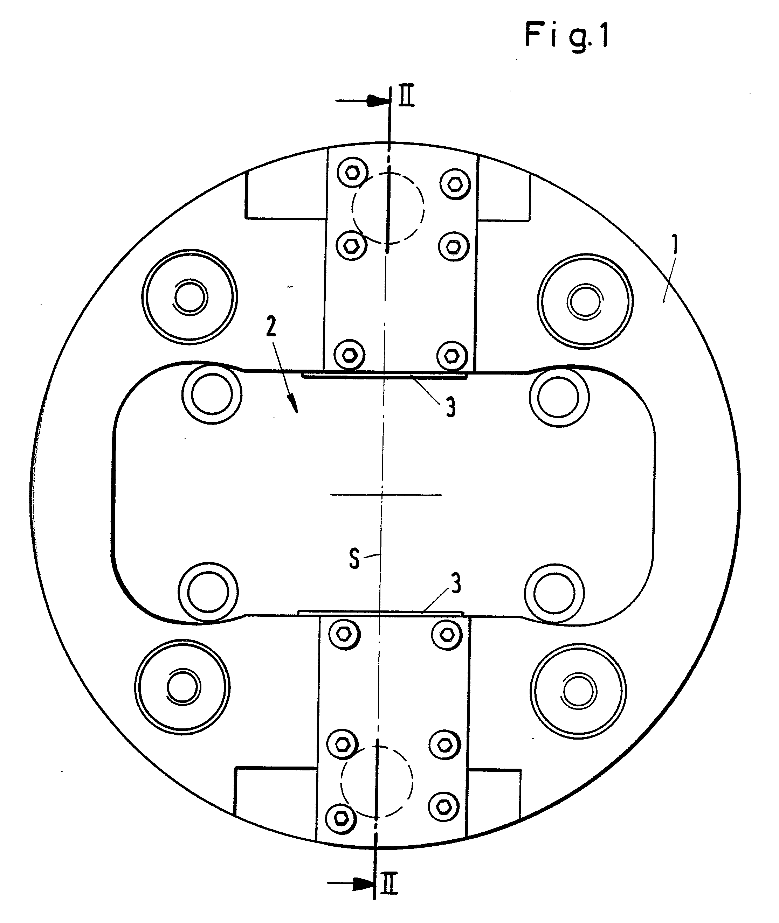

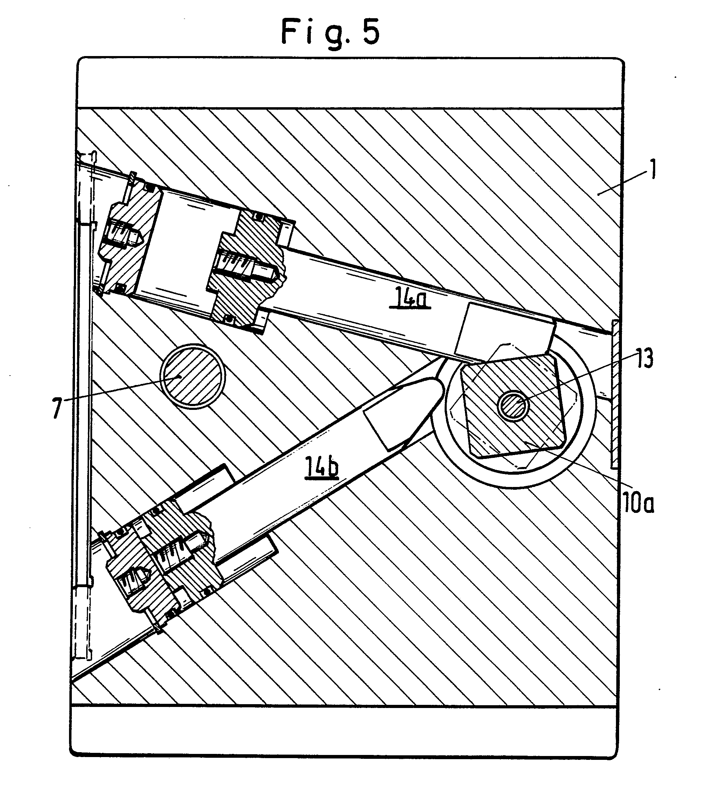

Während bei dem ersten Ausführungsbeispiel nach den Figuren 1 bis 3 die Grundbacken 3 radial verstellbar, aber unverdrehbar im Futterkörper 1 geführt sind, zeigt das zweite Ausführungsbeispiel nach den Figuren 4 und 5 eine Ausführungsform, bei der jede Grundbacke 3 mit einer drehbar gelagerten Zwischenbacke 10 versehen ist. Jede Zwischenbacke 10 ist beim Ausführungsbeispiel mittels eines Radiallagers 11a und eines Axiallagers 11b drehbar in einem zentrischen Hohlraum der Grundbacke 3 gelagert und durch eine Halteschraube 12 sowie einen Sicherungsring 12a gegen ein Herausfallen gesichert. Diese Lagerung und Sicherung ist in Fig.4 erkennbar, die außerdem eine in der Zwischenbacke 10 angeordnete Befestigungsschraube 13 zeigt, die zum Befestigen der auf der Zeichnung nicht dargestellten Aufsatzbacke an der Zwischenbacke 10 dient.

Beim Ausführungsbeispiel nach den Figuren 4 und 5 ist eine der Zwischenbacken 10 mit einem Schwenkantrieb versehen, der schematisch in Fig.5 dargestellt ist. Dieser an sich bekannte Schwenkantrieb wirkt mittels zweier druckmittelbetätigter Stößel 14a und 14b auf einen Mehrkantabschnitt 10a, der an der Zwischenbacke 10 ausgebildet ist. Durch eine nacheinander erfolgende Betätigung der Stößel 4a und 4b ist ein Verdrehen der Zwischenbacke 10 um vorgegebene Verdrehwinkel möglich, wie dies mit strichpunktierten Linien in Fig.5 angedeutet ist. Die auf die eine Zwischenbacke 10 ausgeübte Drehbewegung wird über das zwischen den Spannbacken eingespannte Werkstück auf die andere Zwischenbacke 10 übertragen, so daß nur die Anordnung eines Schwenkantriebes erforderlich ist.

Auch bei der insbesondere in Fig.4 dargestellten zweiten Ausführungsform erfolgt eine Zwangssynchronisation de Hubbewegungen der beiden dem Antrieb der Spannbacken dienenden Kolben 5 mit Hilfe eines als Kupplungswelle 7 ausgebildeten Kupplungsgliedes, wobei die konstruktive Ausbildung dieser Zwangssynchronisation bei der Ausführungsform nach Fig.4 der Ausführung nach Fig.2 entspricht.

## Bezugszeichenliste

1 Futterkörper
2 Spannraum
3 Grundbacke
4 Keilstange
5 Kolben
6 Zylinderraum
7 Kupplungswelle
7a Verzahnung
8 Lagerbuchse
9 Zahnstange
10 Zwischenbacke
10a Mehrkantabschnitt
11a Radiallager
11b Axiallager
12 Halteschraube
12a Sicherungsring
13 Befestigungsschraube
14a Stößel
14b Stößel
D Drehachse
S Spannachse

## Ansprüche

1. Spannfutter mit zwei gegenüberliegenden, aus Grund-und Aufsatzbacke bestehenden Spannbacken, deren Grundbacken in radialer Richtung verstellbar in einem ringförmigen Futterkörper mit zentralem Spannraum geführt und jeweils durch eine im wesentlichen axial verschiebbar im Futterkörper gelagerte Keilstange zentrisch angetrieben sind,
**dadurch gekennzeichnet,**
daß jede Keilstange (4) durch einen Kolben (5) eines Druckmittelzylinders angetrieben ist und daß die Hubbewegungen der beiden Kolben (5) durch ein mechanisches, parallel zur Spannachse (S) der beiden Spannbacken im Futterkörper (1) liegendes Kupplungsglied (7) zwangssynchronisiert sind.

2. Spannfutter nach Anspruch 1, dadurch gekennzeichnet, daß das Kupplungsglied als Kupplungswelle (7) mit an ihren Enden ausgebildeten Verzahnungen (7a) ausgeführt ist, die in entsprechende Zahnstangen (9) eingreifen, die an mit den Kolben (5) verbundenen Kolbenstangen ausgebildet sind.

3. Spannfutter nach Anspruch 1 oder 2, dadurch gekennzeichnet, daß jedes Ende des Kupplungsgliedes (7) unabhängig vom anderen Ende im Verhältnis zur zugehörigen Kolbenstange spielfrei einstellbar ist.

4. Spannfutter nach Anspruch 1 bis 3, dadurch gekennzeichnet, daß die Kupplungswelle (7) ausschließlich im Bereich ihrer Enden im Futterkörper (1) gelagert ist und diese Lager (8) im Verhältnis zur zugehörigen Zahnstange (9) verstellbar sind.

5. Spannfutter nach mindestens einem der Ansprüche 1 bis 4, dadurch gekennzeichnet, daß jede Grundbacke (3) mit einer drehbar gelagerten Zwischenbacke (10) versehen ist und daß mindestens eine dieser drehbaren Zwischenbacken (10) mittels eines Schwenkantriebes (14a,14b) verdrehbar gelagert ist.

Fig.1

Fig. 2

# Fi g. 3

# Fig. 4

# Fig. 5